# EUROPEAN PATENT APPLICATION

(11) **EP 2 315 187 A2**
(43) Date of publication of application: **27.04.2011**
(21) Application number: 10172007.6
(22) Date of filing: 05.08.2010
(51) Int. Cl.: G08C 17/00, H04N 5/44

(54) **Display apparatus, system and method for outputting data**

(30) Priority: 06.10.2009 KR 20090094578
(71) Applicant: Samsung Electronics Co., Ltd., Suwon-si, Gyeonggi-do 442-742 (KR)
(72) Inventor: Koo, Dong-soo, Gyeonggi-do (KR)
(74) Representative: Davies, Robert Ean

(57) **Abstract**

Disclosed are a display apparatus, a system and a method for outputting data, the display apparatus including: a video signal processor which processes a video signal; a display unit which displays an image based on the processed video signal; an encoder which encodes data into binary data; a light emitting diode (LED) unit which outputs a visible ray signal corresponding to the binary data; and a controller which controls the encoder to encode the data into the binary data, and controls the LED unit to flicker to output the visible ray signal based on the binary data to an outside in response to a request for an output of the data. Accordingly, the existing LED unit mounted to the display apparatus can be used for wireless communication based on visible ray thereby enhancing economical efficiency.

## Description

### BACKGROUND

### Field

Aspects of the present inventive concept relate to a display apparatus, system and method for outputting data, and more particularly, to a display apparatus, system and method in which a light emitting diode (LED) for emitting light to indicate a display status of the display apparatus is used in visible-light wireless communication for transmitting data.

### Description of the Related Art

In general, wireless communication using infrared is employed as a representative method for wirelessly transmitting data to a display apparatus. The most general infrared wireless communication is performed between a user input unit that generates an infrared signal and a display apparatus that includes a receiver for receiving the infrared signal. Also, the display apparatus may perform interactive communication using a universal asynchronous receiver transmitter (UART), a universal serial bus (USB), a wired network, or the like. Further, a wireless communication method, such as the infrared, Bluetooth, radio frequency (RF), etc., may be employed in implementing the interactive communication, but is not indispensable to the display apparatus. Thus, if a device is additionally provided to perform the wireless interactive communication for the display apparatus, production cost of the display apparatus increases.

### SUMMARY

According to an aspect of the present inventive concept, there is provided a display apparatus including: a video signal processor which processes a video signal; a display unit which displays an image based on the processed video signal; an encoder which encodes data into binary data; a light emitting diode (LED) unit which outputs a visible ray signal corresponding to the binary data; and a controller which controls the encoder to encode the data into the binary data when requested to output predetermined data, and controls the LED unit to flicker to output the visible ray signal based on the binary data to an outside in response to a request for an output of the data.

The encoder may encode the data by a non-return-to-zero (NRZ) method, a return-to-zero (RZ) method, or a non-return-to-zero-inverted (NRZI) method.

The encoder may encode the data in a form of a Morse code.

The encoder may encode the data according to standards of infrared data association (IrDA).

The encoder may encode the data according to flickering times of the LED unit per unit time.

The encoder may encode the data according to a duty ratio of the LED unit per unit time.

The display apparatus may further include: a user input unit which transmits an infrared signal for requesting output of the data; and a receiver which receives the infrared signal from the user input unit, wherein the controller controls the LED unit to output the visible ray signal corresponding to the data requested by the infrared signal to the outside by flickering.

The user input unit may further include a light receiver receiving the output visible ray signal.

According to another aspect of the present inventive concept, there is provided a display system including: a display apparatus including a video signal processor which processes a video signal, a display unit which displays an image based on the processed video signal, an encoder which encodes data into binary data, a light emitting diode (LED) unit which outputs a visible ray signal corresponding to the binary data, and a controller which controls the encoder to encode the data into the binary data and controls the LED unit to flicker to output the visible ray signal based on the binary data to an outside in response to a request for an output of the data; and an external device including a light receiver which receives the output visible ray signal from the LED unit, and a decoder which decodes the received visible ray signal.

The light receiver may further include a color filter which filters the output visible ray.

The display system may further include a user input unit which transmits an infrared signal for requesting the output of the data; and the display apparatus may further include a receiver which receives the infrared signal from the user input unit, wherein the controller outputs the visible ray signal corresponding to the data requested by the infrared signal to the outside through flickering of the LED unit.

According to still another aspect of the present inventive concept, there is provided a method of outputting data in a display system, the method including: receiving a request for an output of data; encoding the data into binary data; and outputting a visible ray signal corresponding to the binary data to an outside through flickering of a light emitting diode (LED) unit.

The receiving of the request may include receiving an infrared signal for requesting the output of the data from a user input unit.

The outputting of the visible ray signal may include transmitting the visible ray signal to a light receiver of an external device.

The outputting of the visible ray signal may include transmitting the visible ray signal to a light receiver of a user input unit.

According to yet another aspect of the present inventive concept, there is provided a device for processing data from a display apparatus, the device including: a light receiver which receives a visible ray signal output from an LED unit of the display apparatus in response to a request for an output of data, and a decoder which decodes the received visible ray signal, wherein the visible ray signal is based on binary data corresponding to the requested data.

### BRIEF DESCRIPTION OF THE DRAWINGS

The above and/or other aspects of the present inventive concept will become apparent and more readily appreciated from the following description of the exemplary embodiments, taken in conjunction with the accompanying drawings, in which:
FIG. 1 is a block diagram of a display apparatus according to an exemplary embodiment of the present inventive concept;
FIG. 2 shows a signal encoded by a non-return-to-zero (NRZ) method according to an exemplary embodiment of the present inventive concept;
FIG. 3 is a block diagram of a display system according to an exemplary embodiment of the present inventive concept;
FIG. 4 illustrates an example of a color filter that is provided in a light receiver of an external device according to an exemplary embodiment of the present inventive concept;
FIG. 5 illustrates the display system according to an exemplary embodiment of the present inventive concept; and
FIG. 6 is a flowchart of a method for outputting data in the display system according to an exemplary embodiment of the present inventive concept.

### DETAILED DESCRIPTION OF EXEMPLARY EMBODIMENTS

Below, exemplary embodiments will be described in detail with reference to accompanying drawings so as to be easily realized by a person having ordinary knowledge in the art. The present inventive concept may be embodied in various forms without being limited to the exemplary embodiments set forth herein. Descriptions of well-known parts are omitted for clarity, and like reference numerals refer to like elements throughout.

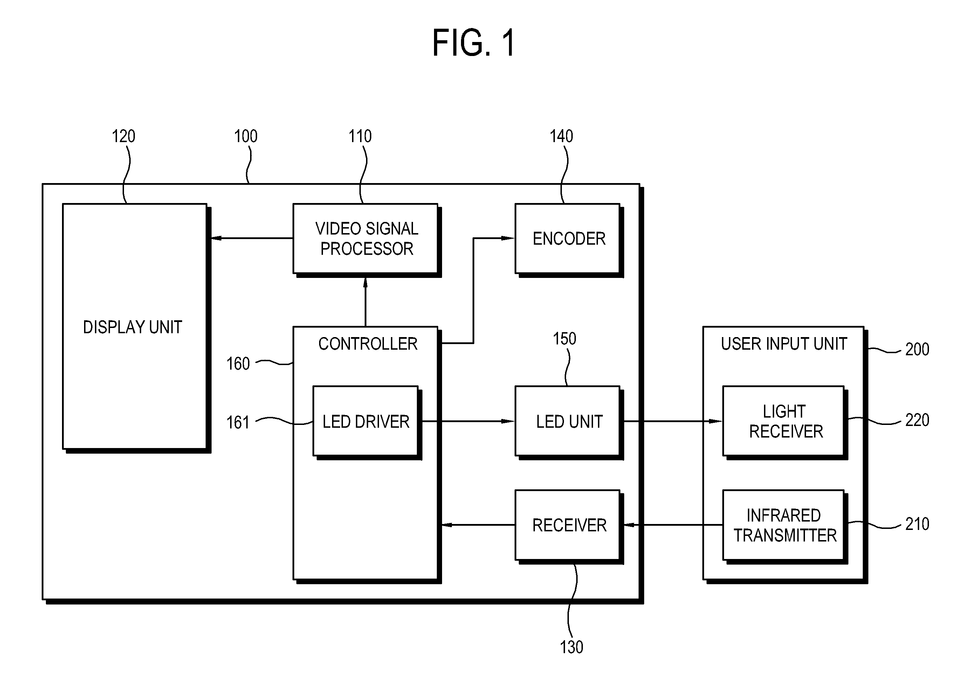

FIG. 1 is a block diagram of a display apparatus 100 according to an exemplary embodiment of the present inventive concept. As shown in FIG. 1, the display apparatus 100 includes a video signal processor 110, a display unit 120, a receiver 130, an encoder 140, a light emitting diode (LED) unit 150, and a controller 160.

The video signal processor 110 receives a video signal from an exterior source and processes the received video signal to be displayed on the display unit 120. Thus, the display apparatus 100 in this exemplary embodiment may further include a second receiver (not shown), in addition to the receiver 130, to receive the video signal from the exterior source.

The display apparatus 100 in this exemplary embodiment may further include an audio signal processor (not shown) to process an audio signal, and/or a speaker (not shown) to output the processed audio signal.

The display unit 120 displays the video signal processed by the video signal processor 110. The display unit may be embodied by a liquid crystal display (LCD) panel, a light emitting diode (LED) panel, an organic light emitting diode (OLED) panel, a plasma display panel (PDP), a cathode ray tube (CRT) panel, or the like.

The receiver 130 receives an infrared signal, which requests an output of data, from a user input unit 200, to be described later.

The encoder 140 encodes the requested data into binary data. Further, the encoder 140 may encode the binary data of '0' and '1' by a non-return-to-zero (NRZ) method, a return-to-zero (RZ) method, or a non-return-to-zero-inverted (NRZI) method. Also, the encoder 140 may encode the requested data into binary data and encode the binary data into a Morse code. Thus, the LED unit 150 may be flickered at high speed in response to a regular flickering signal, like the Morse code, based on the encoded binary data. Here, the Morse code uses a dot and a line, in which the dot may be set up as `1' between '0' and '0' and the line may be set up as two or more 'Is' between '0' and '0.' Thus, data of '0' and '1' may be transmitted as a Morse code.

Moreover, the encoder 140 may encode the requested data into binary data and encode the binary data on the basis of pulse width standards of the infrared data association (IrDA). Further, the encoder 140 may encode the requested data into binary data and encode the binary data on the basis of flickering times of the LED unit 150 (to be described later) per unit time. That is, the binary data can be encoded by converting the frequency thereof. Furthermore, the encoder 140 may encode the requested data into binary data and encode the binary data on the basis of a duty ratio of the LED unit 150 per unit time. The duty ratio refers to an on/off ratio of the LED unit 150 during a period of a repetitive signal. Here, the duty ratio per unit time may be set as 50% to encode the binary data, whereby the LED unit 150 may be flickered based on the set duty ratio per unit time.

The display apparatus 100 in this exemplary embodiment may further include a storage (not shown) to store data. Here, the data may include text data, video data, audio data, etc. The text data may include test information of the display apparatus 100. The test information includes data for determining whether the display apparatus 100 is defective or not, such as information about settings for some or all of the elements of the display apparatus 100.

Also, the data may include identification (ID) information about the display apparatus 100. If the user input unit 200 cannot ascertain the ID information of the display apparatus 100 to perform infrared communication, the user input unit 200 may transmit an infrared signal requesting the ID information to the display apparatus 100 such that the display apparatus 100 transmits the ID information to the user input unit 200, thereby making the infrared communication possible through the user input unit 200. Also, if the data is to be updated (such as data for the user input unit 200), the data may be downloaded and stored by the display apparatus 100 capable of communicating with an external server, for example, through a network.

The LED unit 150 transmits a signal of visible light. Thus, the LED unit 150 may include one or more of a red LED, a blue LED, a green Led, a white LED, etc. as LEDs for the visible light. Here, the LED unit 150 has a basic operation of emitting light for indicating a state of the display apparatus 100. For example, the LED unit 150 is placed on the surface of the display apparatus 100 and informs that the display apparatus 100 is turned on/off. Thus, the LED unit 150 in this case may emit light to indicate the state of the display apparatus 100.

The controller 160 may further include an LED driver 161. The controller 160 controls the encoder 140 to encode the requested data into the binary data when requested to output the data. By receiving the binary encoded signal of the data from the encoder 140, and controlling the LED driver 161 to cause the LED unit 150 to flicker, it is possible to output the visible light to the exterior.

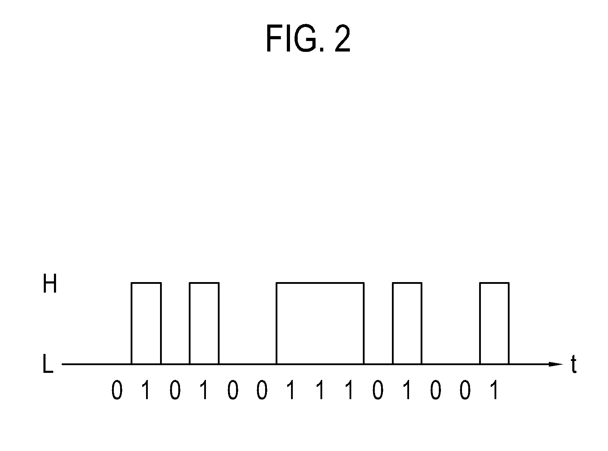

FIG. 2 shows a signal encoded by a non-return-to-zero (NRZ) method according to an exemplary embodiment of the present inventive concept. As shown therein, the encoder 140 uses the NRZ method in which '0' and ' 1 ' of the binary data are set up as low and high, respectively, and a signal of 1 is not to return to zero. Thus, the signal of '1' is high to turn on the LED unit 150 and the signal of '0' is low to turn off the LED unit 150, thereby making the LED unit 150 flicker to transmit data. It is understood that all embodiments are not limited thereto. For example, in other exemplary embodiments, the signal of `1' is high to turn off the LED unit 150 and the signal of '0' is low to turn on the LED unit 150.

Further, the controller 160 may additionally include a power supply (not shown) to supply power to the LED unit 150. Accordingly, it is possible for the LED driver 161 to supply or cut off the power needed to make the LED unit 150 flicker in response to the binary signal received from the encoder 140.

Also, the controller 160 may further include a clock signal generator (not shown). Thus, the encoder 140 can perform encoding on the basis of a duty ratio of the LED unit 150 per unit time with respect to a clock signal generated in the clock signal generator.

Referring back to FIG. 1, the display apparatus 100 in this exemplary embodiment further includes a user input unit 200. The user input unit 200 includes an infrared transmitter 210 and a light receiver 220, though it is understood that in other embodiments, the light receiver 220 may be omitted.

The infrared transmitter 210 sends the display apparatus 100 an infrared signal for requesting output of the data. The light receiver 220 receives a visible ray signal of the data requested by the infrared signal.

According to an exemplary embodiment of the present inventive concept, in the case that the user input unit 200 includes only the infrared transmitter 210, if the infrared transmitter 210 transmits a signal to request the output of the data, the display apparatus 100 receives the signal through the receiver 130 and encodes the requested data into binary data through the encoder 140. Accordingly, the controller 160 makes the LED unit 150 flicker to output a visible ray signal based on the binary data.

According to another exemplary embodiment of the present inventive concept, in the case that the user input unit 200 includes the infrared transmitter 210 and the light receiver 220, the light receiver 220 may receive the visible ray signal as the LED unit 150 of the display apparatus 100 flickers. Thus, the light receiver 220 may include an optical sensor capable of receiving the visible ray signal.

According to still another exemplary embodiment of the present inventive concept, if the user input unit 200 transmits an infrared signal through the infrared transmitter 210 in order to request ID information of the display apparatus 100, the display apparatus 100 receives the infrared signal through the receiver 130, encodes the ID information into binary data through the encoder 140, and makes the LED unit 150 flicker on the basis of the binary data, thereby transmitting a visible ray signal from the LED unit 150 to the light receiver 220. Thus, the user input unit 200 can receive the visible ray signal and perform normal infrared communication with the display apparatus 100.

According to yet another exemplary embodiment of the present inventive concept, in the case where the user input unit 200 requests or is to receive update data and the display apparatus 100 is a digital television (DTV) capable of implementing network communication with an external server and has already downloaded and stored the update data, if the user input unit 200 transmits a signal for requesting the output of the update data through the infrared transmitter 210, the display apparatus 100 receives the signal through the receiver 130 and encodes the update data into binary data through the encoder 140, thereby transmitting a visible ray signal based on the binary data to the light receiver 220 as the LED unit 150 flickers. Accordingly, the display apparatus 100 receives the infrared signal from the user input unit 200, and transmits the data requested by the infrared signal to the user input unit 200 as the visible ray signal through flickering of the LED unit 150, thereby easily performing interactive wireless communication.

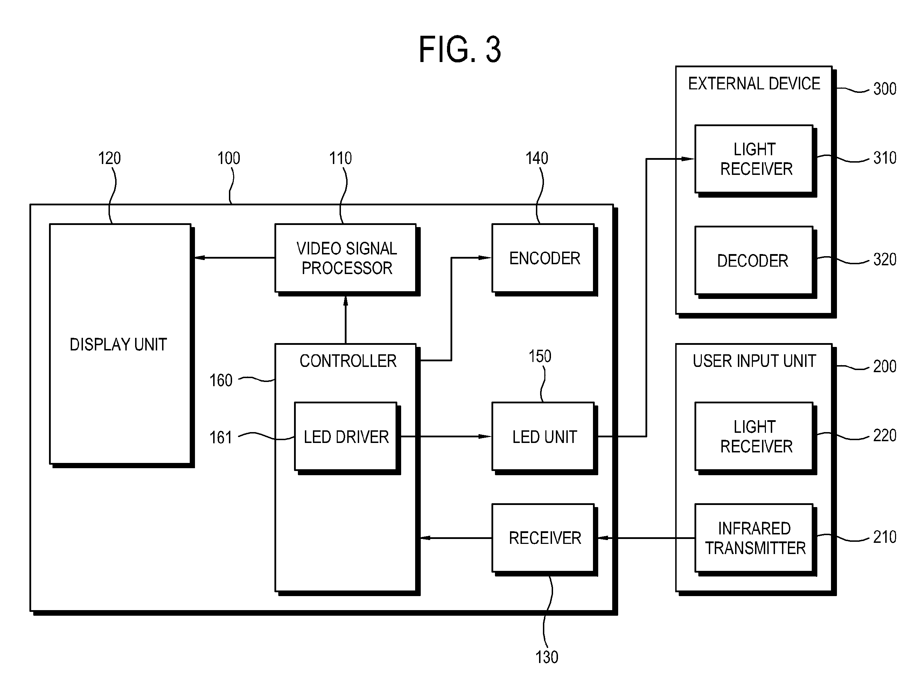

Aspects of the present inventive concept further provide a display system. FIG. 3 is a block diagram of a display system according to an exemplary embodiment of the present inventive concept. As shown in FIG. 3, the display system includes the display apparatus 100 described above with reference to FIG. 1 and an external device 300. Since the display apparatus 100 has been described above with reference to FIG. 1, repetitive descriptions about the display apparatus 100 are avoided herein.

The external device 300 includes a light receiver 310 and a decoder 320. The light receiver 310 may include an optical sensor (not shown) capable of receiving a visible ray signal from the display apparatus 100. When the light receiver 310 receives the visible ray signal, the light receiver 310 acquires data from the visible ray signal of the display apparatus 100 in reverse order of converting the data into the visible ray signal. Further, the light receiver 310 may include a color filter (not shown) for filtering visible rays.

That is, as mentioned above, the LED unit 150 of the display apparatus 100 may include a red LED, a blue LED, a green LED, a white LED, etc. as a visible ray LED unit. Thus, the color filter allows only one or more predetermined light colors of the LED unit 150 to pass therethrough according to light colors of the LED unit 150 mounted to the display apparatus 100. When the light receiver 310 of the external device 300 receives the visible ray signal from the display apparatus 100, the color filter prevents noise due to ambient light.

The decoder 320 decodes the visible ray signal received by the light receiver 310, thereby analyzing and using data transmitted from the display apparatus 100.

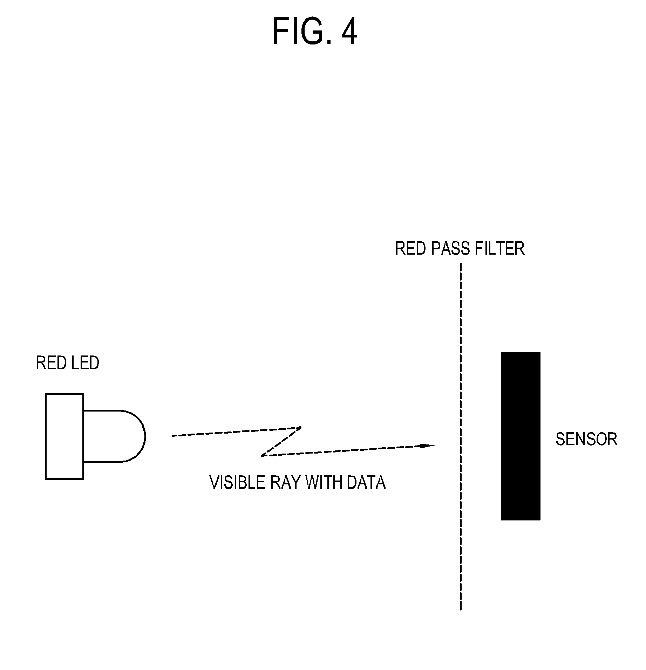

FIG. 4 illustrates an example of a color filter that is provided in the light receiver 310 of the external device 300 according to an exemplary embodiment of the present inventive concept. As shown in FIG. 4, if the LED unit 150 of the display apparatus 100 is a red LED unit, the light receiver 310 of the external device 300 includes a red pass filter to allow only red light to pass therethrough and filter off any other color light (i.e., ambient light), thereby receiving the visible ray signal from the display apparatus 100 without noise. It is understood that the color filter may additionally or alternatively be provided in the light receiver 220 of the user input unit 200 in other exemplary embodiments of the present inventive concept.

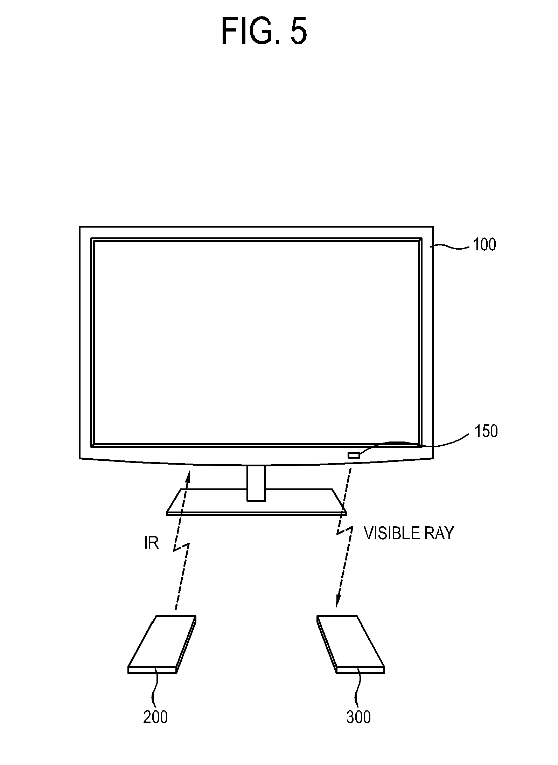

FIG. 5 illustrates the display system according to an exemplary embodiment of the present invention. As shown in FIG. 5, the infrared transmitter 210 of the user input unit 200 sends the display apparatus 100 an infrared signal for requesting an output of data. When the receiver 130 of the display apparatus 100 receives the infrared signal, the controller 160 of the display apparatus 100 controls the encoder 140 to encode the requested data into a binary signal and controls the LED driver 161 to make the LED unit 150 flicker in response to the binary signal, thereby transmitting a visible ray signal to the light receiver 310 of the external device 300. Then, the visible ray signal is received in the light receiver 310 and decoded into the data by the decoder 320.

Here, the data requested by the user input unit 200 may be test information for the display apparatus 100. When the user input unit 200 transmits an infrared signal for requesting the test information for the display apparatus, the encoder 140 of the display apparatus 100 encodes the corresponding test data into binary data and the LED unit 150 transmits the binary data to the light receiver 310 of the external device 300 and/or the light receiver 220 of the user input unit 200 in the form of a visible ray signal by flickering. The external device 300 acquires the data by decoding the data received in the light receiver 310 through the decoder 320, and determines whether the display apparatus 100 is defective or not.

Aspects of the present inventive concept also provide a method for outputting data in the display system. The method for outputting data in the display system according to an exemplary embodiment of the present inventive concept includes: receiving a request for an output of data; encoding the requested data into binary data; and outputting a visible ray signal based on the binary data through flickering of an LED unit 150 of a display apparatus 100. Here, the operation of receiving the request may include receiving an infrared signal for requesting the output of the data from a user input unit 200. Also, the operation of outputting the visible ray signal may include transmitting the visible ray signal to a light receiver 310 of an external device 300. Further, the operation of outputting the visible ray signal may include transmitting the visible ray signal to a light receiver 220 of the user input unit 200.

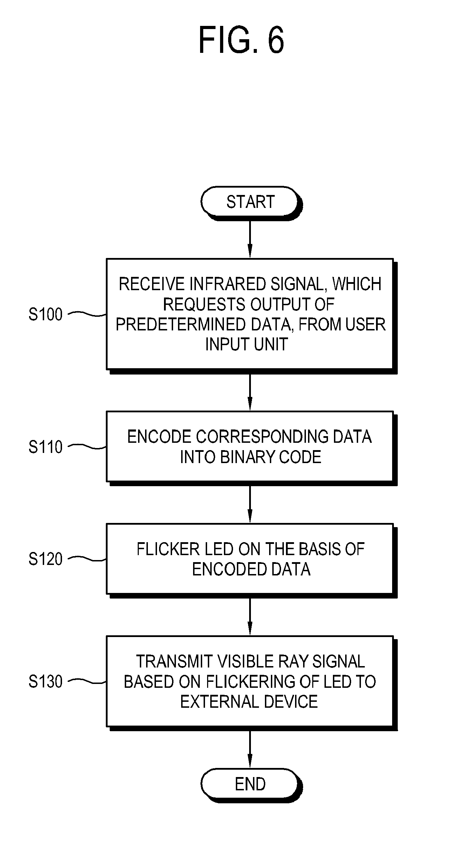

FIG. 6 is a flowchart of a method for outputting data in the display system according to an exemplary embodiment of the present inventive concept. As shown in FIG. 6, when an infrared transmitter 210 of the user input unit 200 transmits a signal for requesting the output of the data, a light receiver 130 of the display apparatus 100 receives the infrared signal in operation S100. When the display apparatus 100 receives the infrared signal (operation S100), a controller 160 of the display apparatus 100 controls an encoder 140 to encode the data requested by the infrared signal into a binary code in operation S110. The controller 160 receives the binary data from the encoder 140 and controls an LED driver 161 to flicker the LED unit 150 in response to a signal based on the binary data in operation S120. A visible ray signal based on the flickering of the LED unit 150 is transmitted to the light receiver 310 of the external device 300 in operation S130, so that the external device 300 can acquire the data by decoding the received signal.

While not restricted thereto, aspects of the present inventive concept can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Aspects of the present inventive concept may also be realized as a data signal embodied in a carrier wave and comprising a program readable by a computer and transmittable over the Internet. Moreover, while not required in all aspects, one or more units of the display apparatus 100, the user input unit 200, and/or the external device 300 can include a processor or microprocessor executing a computer program stored in a computer-readable medium, such as a local storage. Also, the exemplary embodiments of the present inventive concept can be written as computer programs transmitted over a computer-readable transmission medium, such as a carrier wave, and received and implemented in general-use digital computers that execute the programs.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

## Claims

1. A display apparatus comprising:
a video signal processor which processes a video signal;
a display unit which displays an image based on the processed video signal;
an encoder which encodes data into binary data;
a light emitting diode (LED) unit which outputs a visible ray signal corresponding to the binary data; and
a controller which controls the encoder to encode the data into the binary data, and controls the LED unit to flicker to output the visible ray signal based on the binary data to an outside in response to a request for an output of the data.

2. The display apparatus according to claim 1, wherein the encoder encodes the data by a non-return-to-zero (NRZ) method, a return-to-zero (RZ) method, or a non-return-to-zero-inverted (NRZI) method.

3. The display apparatus according to claim 1, wherein the encoder encodes the data in a form of a Morse code.

4. The display apparatus according to claim 1, wherein the encoder encodes the data according to standards of infrared data association (IrDA).

5. The display apparatus according to claim 1, wherein the encoder encodes the data according to flickering times of the LED unit per unit time.

6. The display apparatus according to claim 1, wherein the encoder encodes the data according to a duty ratio of the LED unit per unit time.

7. The display apparatus according to claim 1, further comprising:
a receiver which receives an infrared signal from a user input unit which transmits the infrared signal for requesting the output of the data,
wherein the controller controls the LED unit to flicker to output the visible ray signal corresponding to the data requested by the infrared signal to the outside.

8. The display apparatus according to claim 7, wherein the LED unit outputs the visible ray signal to a light receiver of the user input unit receiving the output visible ray signal to be processed by the user input unit.

9. The display apparatus according to claim 8, further comprising:
a storage unit to store the data,
wherein the data is update data for the user input unit and is received by the display apparatus from an external server through a network communication.

10. The display apparatus according to claim 7, wherein the LED unit outputs the visible ray signal to a light receiver of an external device, different from the user input unit, receiving the output visible ray signal to be processed by the external device.

11. The display apparatus according to claim 10, wherein the data is test data such that the visible ray signal based on the test data is used by the external device to determine whether the display apparatus is defective.

12. A method of outputting data in a display system, the method comprising:
receiving a request for an output of data;
encoding the requested data into binary data; and
outputting a visible ray signal based on the binary data to an outside through flickering of a light emitting diode (LED) unit.

13. The method according to claim 12, wherein the receiving of the request comprises receiving, from a user input unit, an infrared signal for requesting the output of the data.

14. The method according to claim 12, wherein the outputting of the visible ray signal comprises transmitting, by a display apparatus, the visible ray signal to a light receiver of an external device.
